# EUROPÄISCHE PATENTSCHRIFT

(11) **EP 1 832 624 B1**
(45) Veröffentlichungstag und Bekanntmachung des Hinweises auf die Patenterteilung: **13.05.2009**
(21) Anmeldenummer: 06021515.9
(22) Anmeldetag: 13.10.2006
(51) Int. Cl.: C08K 3/22

(54) **Verwendung von Cerdioxid zur Stabilisierung von organischen Polymeren gegenüber freien Radikalen**
Use of cerium dioxide for the stabilization of organic polymers against free radicals
L'utilisation d'oxyde de cérium pour la Stabilisation de polymères organiques contre les radicaux libres

(30) Priorität: 09.03.2006 DE 102006011375
(43) Veröffentlichungstag der Anmeldung: 12.09.2007
(73) Patentinhaber: Byk-Chemie GmbH, 46483 Wesel (DE)
(72) Erfinder: Berkei, Michael, Dr., 45721 Haltern am See (DE); Nolte, Ulrich, Dr., 47533 Kleve (DE); Sawitowski, Thomas, Dr., 45133 Essen (DE)
(74) Vertreter: Gesthuysen, von Rohr & Eggert

(56) Entgegenhaltungen:
- US-A1- 2006 046 120
- DATABASE WPI Week 199549 Derwent Publications Ltd., London, GB; AN 1995-380229 XP002412554 -& JP 07 258520 A (NIPPON ESTER CO LTD) 9. Oktober 1995 (1995-10-09)
- DATABASE WPI Week 199511 Derwent Publications Ltd., London, GB; AN 1995-078129 XP002412555 -& JP 07 003070 A (MITSUBISHI GAS CHEM CO INC) 6. Januar 1995 (1995-01-06)
- DATABASE WPI Week 200055 Derwent Publications Ltd., London, GB; AN 2000-581800 XP002412556 -& JP 2000 191919 A (SHINETSU CHEM IND CO LTD) 11. Juli 2000 (2000-07-11)
- DATABASE WPI Week 199213 Derwent Publications Ltd., London, GB; AN 1992-099911 XP002412557 -& JP 04 041547 A (TORAY IND INC) 12. Februar 1992 (1992-02-12)
- DATABASE WPI Week 199702 Derwent Publications Ltd., London, GB; AN 1997-017492 XP002412558 -& JP 08 283451 A (IDEMITSU PETROCHEM CO) 29. Oktober 1996 (1996-10-29)
- DATABASE WPI Week 199304 Derwent Publications Ltd., London, GB; AN 1993-031717 XP002412559 -& JP 04 359047 A (TORAY IND INC) 11. Dezember 1992 (1992-12-11)

## Beschreibung

Die vorliegende Erfindung betrifft das Gebiet der Stabilisierung von organischen Polymeren gegenüber freien Radikalen bzw. UV-Einwirkung.

Insbesondere betrifft die vorliegende Erfindung die Verwendung von Cerdioxid CeO₂, vorzugsweise in Form diskreter Cerdioxidpartikel, als anorganischer Radikalfänger zur Stabilisierung von organischen Polymeren gegen deren Abbau durch freie Radikale, die insbesondere durch photochemische, thermische, physikalische und/oder chemische Induktion oder durch UV-Einwirkung (Einwirkung von ultravioletter Strahlung bzw. ultraviolettem Licht) erzeugt werden können.

Zur Stabilisierung von organischen Polymeren, beispielsweise in Form von polymerbasierten Lacken, Farben, Beschichtungsmassen oder dergleichen, gegen deren beispielsweise photochemisch induzierten Abbau durch freie Radikale werden heutzutage im wesentlichen vier Gruppen von Substanzen bzw. Substanzklassen eingesetzt:
Zum einen kommen organische UV-Absorber zum Einsatz, z. B. auf Basis von Hydroxyphenylbenzotriazolen, Hydroxybenzophenonen, Hydroxyphenyltriazinen, Oxyanilinen, Hydroxyphenylpyrimidinen, Salicylsäurederivaten und Cyanoacrylaten.

Zum anderen kommen organische Radikalfänger, insbesondere auf Basis sterisch gehinderter Amine oder von Phenolen, zum Einsatz.

Weiterhin werden peroxidzersetzende Substanzen, wie Thioether, Phosphite etc., eingesetzt.

Schließlich werden auch spezielle anorganische Füllstoffe bzw. Pigmente, so z. B. solche auf Basis von Zinkoxid, Titandioxid, Rußen, Eisenoxiden oder dergleichen, eingesetzt, wobei insbesondere Füllstoffpartikel mit Teilchengrößen im Bereich von 0,005 bis 100 µm zum Einsatz kommen.

Die vorgenannten Substanzen bzw. Substanzklassen beeinflussen in unterschiedlicher Weise den Zersetzungsprozeß organischer Polymere infolge der Einwirkung ultravioletter Strahlung:
So ist es bekannt, daß sowohl die organischen UV-Absorber der vorgenannten Art als auch die vorgenannten anorganischen Füllstoffe bzw. Pigmente imstande sind, die einfallende ultraviolette Strahlung durch Elektronenanregung zu absorbieren und im Idealfall in thermische Energie umzusetzen.

Der genannten Reaktion sind jedoch Grenzen gesetzt: Die Absorption der UV-Strahlung ist nicht vollständig möglich, so daß nichtabsorbierte UV-Strahlung zu Radikalbildungsreaktionen innerhalb der Polymere führt. Aber auch die absorbierte UV-Strahlung führt über Elektronenanregungsprozesse zu Radikalbildungsreaktionen innerhalb der Polymere. Insgesamt führen somit nichtabsorbierte wie absorbierte UV-Strahlung zu Radikalkettenreaktionen in den Polymeren, wobei Bindungen gespalten werden, was zu einem Abbau der Polymermatrix und beispielsweise im Fall organisch basierter Lacke, Farben, Beschichtungsmassen oder dergleichen auch zu einem Abbau des darunterliegenden Substrats führen kann und zudem Farbveränderungsprozesse, insbesondere eine Vergilbung, der Polymere und/oder des Substrats bewirken kann.

Um die vorgenannten Prozesse zu verhindern oder aber zumindest weitgehend einzudämmen, werden heutzutage organische Radikalfänger der vorgenannten Art oftmals mit UV-Absorbern kombiniert. Die entstehenden Radikale werden durch die genannten Stoffe in ihrer Wirkung weitgehend neutralisiert, wobei sich jedoch die UV-Absorber und die organischen Radikalfänger über die Zeit allmählich abbauen und damit in ihrer Wirksamkeit nachlassen. Damit verbunden ist ein zeitabhängiger Effekt in der UV-Stabilisierung immer dort zu beobachten, wo organische Radikalfänger mit organischen oder aber auch anorganischen UV-Absorbern kombiniert werden.

Für weitergehende Einzelheiten zur UV-Stabilisierung von Farben, Lacken, Beschichtungsmassen oder dergleichen kann beispielsweise verwiesen werden auf A. Valet, "Light Stabilizers for Paints", Curt R. Vincentz Verlag, Hannover, 1997 (ISBN 3-87870-443-7 Gb.).

Die JP-A-07/258520 betrifft polyalkylenterephthalatbasierte Polyester, welche durch Copolymerisation einer bifunktionellen organischen Phosphorverbindung erhältlich sind, wobei die betreffenden Polyester zur Verarbeitung als Fasern z.B. in der Bekleidungsindustrie, für magnetische Bänder, für Filme für die Photographie, für Kondensatorbestandteile oder dergleichen bestimmt sind. Die Polyester enthalten kernförmige Zuschlagsmaterialien auf Basis von Cerdioxid/Siliciumdioxid oder Cerdioxid/Talk in Mengen von 0,05 bis 10 Gew.-%. Hierdurch soll eine verbesserte Lichtbeständigkeit erreicht werden. Das Cerdioxid wird als UV-Absorber eingesetzt und soll ultraviolette Strahlung absorbieren und auf diese Weise die Bildung freier Radikale unterdrükken.

Die US 2006/0046120 A1 betrifft eine Brennstoffzelle mit einer speziellen Membran-Elektroden-Anordnung zwischen zwei Elektroden, wobei die Brennstoffzelle als Verunreinigung Peroxide enthält, welche zu einer Beschädigung der Membran führen können. Um dies zu verhindern, ist es vorgesehen, der Brennstoffzelle einen Bestandteil zuzusetzen, welcher verhindert, daß die Peroxide die betreffende Membran schädigen können, wobei es sich hierbei z. B. um einen Radikalfänger handeln kann. So kann in diesem Zusammenhang das Polymer der betreffenden Membran speziell funktionelle Gruppen enthalten, welche Radikalfängereigenschaften besitzen. Weiterhin kann alternativ der das Peroxid unschädlich machende Bestandteil in der Brennstoffzelle vorhanden sein.

Die JP-A-07/003070 betrifft eine Harzzusammensetzung zur Verwendung in elektronischen Bauteilen oder Bauteilen in der Automobilindustrie, wobei die Zusammensetzung ein thermoplastisches Harz zusammen mit einem anorganischen Füllstoff aus der Gruppe von Titandioxid, Cerdioxid und Zinkoxid in Mengen von 0,05 bis 10 Gew.-% enthält.

Die JP-A-2000/191919 betrifft ein Harz mit guter Dispergierbarkeit, guter Transparenz und guter Wetterbeständigkeit, wobei dem Harz ein UVabsorbierendes Pigment auf Basis von Cerdioxidpartikeln zugesetzt ist.

Die JP-A-04/041547 betrifft eine thermoplastische Polyesterharzzusammensetzung für Magnetbänder, welche aus einem Polyesterharz besteht, dem zu Zwecken der Erhöhung der Abrieb- und Kratzfestigkeit Cerdioxidpartikel zugesetzt sind. Weiterhin kann das Polyesterharz inaktive Partikel, wie z. B. TiO₂, enthalten.

Des weiteren betrifft die JP-A-08/283451 eine thermoplastische Harzzusammensetzung für Automobilbauteile, elektronische Bauteile oder dergleichen, wobei die Harzzusammensetzung neben dem thermoplastischen Harz halogenbasierte flammhemmende Mittel, anorganische Cerverbindungen, flammhemmende Zusatzmittel und TiO₂ oder ZnO enthält. Das Titandioxid und das Zinkoxid sind zugesetzt, um die Lichtbeständigkeit zu verbessern.

Schließlich betrifft die JP-A-04/359047 die Herstellung einer Polyesterzusammensetzung mit guter Abriebfestigkeit, welcher unter anderem Cerdioxidpartikel und Titandioxidpartikel zugesetzt sein können.

Aufgabe der vorliegenden Erfindung ist daher die Verbesserung der Stabilisierung von organischen Polymeren gegenüber freien Radikalen, insbesondere eine verbesserte Stabilisierung von organischen Polymeren gegen deren photochemisch, thermisch, physikalisch und/oder chemisch induzierten Abbau durch freie Radikale, beispielsweise gegen UV-Einwirkung, unter Vermeidung oder aber zumindest Abschwächung der vorgenannten Nachteile des Standes der Technik.

Die Anmelderin hat überraschenderweise herausgefunden, daß sich Cerdioxid, insbesondere in partikulärer Form, in hervorragender Weise als anorganischer Radikalfänger in bezug auf die Stabilisierung von organischen Polymeren eignet.

Gegenstand der vorliegenden Erfindung - gemäß einem ersten Aspekt der vorliegenden Erfindung - ist somit die Verwendung von Cerdioxid, insbesondere in Form diskreter Cerdioxidpartikel, als anorganischer Radikalfänger zur Stabilisierung von organischen Polymeren gegen deren insbesondere photochemisch, thermisch, physikalisch und/oder chemisch induzierten Abbau durch freie Radikale, insbesondere gegen UV-Lichteinwirkung, wobei das Cerdioxid in Form diskreter Cerdioxidpartikel mit Teilchengrößen im Bereich von 0,005 bis 150 µm und in Kombination mit mindestens einem UV-Absorber und/oder mit mindestens einem weiteren Radikalfänger eingesetzt wird, wobei die Kombination aus Cerdioxid einerseits und UV-Absorber und/oder weiterem Radikalfänger andererseits in Mengen von 0,2 bis 50 Gew.-%, bezogen auf die zu stabilisierenden Polymere, eingesetzt wird und wobei das gewichtsbezogene Verhältnis von Cerdioxid einerseits zu UV-Absorber und/oder weiterem Radikalfänger andererseits, bezogen auf die Kombination von Cerdioxid und UV-Absorber und/oder weiterem Radikalfänger, im Bereich von 0,05 : 99,5 bis 50 : 50 variiert.

Im Rahmen der vorliegenden Erfindung hat die Anmelderin nämlich gefunden, daß Cerdioxid in unerwarteter Weise als anorganischer Radikalfänger wirkt und auf diese Weise organische Polymere gegen deren insbesondere photochemisch, thermisch, physikalisch und/oder chemisch induzierten Abbau durch freie Radikale, bzw. gegen UV-Einwirkung, zu schützen imstande ist, ohne daß das Cerdioxid selbst verbraucht bzw. zersetzt wird - im Unterschied zu herkömmlichen, insbesondere organischen Radikalfängern.

Der Begriff des Radikalfängers, wie er im Rahmen der vorliegenden Erfindung verwendet wird, ist eine fachsprachliche Bezeichnung insbesondere für solche Substanzen, die reaktive freie Radikale unschädlich machen, beispielsweise durch physikalische und/oder chemische Effekte bzw. Reaktionen. Für weitergehende Einzelheiten zum Begriff des Radikalfängers und der freien Radikale kann beispielsweise verwiesen werden auf Römpp Chemielexikon, Georg Thieme Verlag Stuttgart/New York, 10. Auflage, Band 5, 1998, Seiten 3695 bis 3697, Stichworte: "Radikal-Fänger" und "Radikale", deren gesamter diesbezüglicher Offenbarungsgehalt, einschließlich der dort referierten Literaturstellen, hiermit durch Bezugnahme eingeschlossen ist.

Bislang ist Cerdioxid noch nicht als anorganischer Radikalfänger in Betracht gezogen worden. Dieser spezielle Effekt und seine technische Anwendung gehen erst auf die Erkenntnisse der Anmelderin zurück. Allenfalls bekannt ist aus dem Stand der Technik die Verwendung von Cerdioxid als Beschichtung bzw. Coating spezieller titandioxidhaltiger Pigmente, wobei in diesen cerdioxidgecoateten Titandioxidpigmentpartikeln des Standes der Technik (welche beispielsweise Anwendung in der Herstellung von Metalleffekt- und Perlglanzpigmenten finden) das Cerdioxid aber als Vermittler in der Rekombination von Elektron-Loch-Paaren wirkt, die in darunterliegenden Schichten aus dem photoaktiven Titandioxid erzeugt werden; diese Anwendung des Standes der Technik erfordert aber - im Gegensatz zur erfindungsgemäßen Verwendung von Cerdioxid als anorganischer Radikalfänger - zwingend das Vorhandensein von Titandioxid im unmittelbaren Zusammenwirken und hat folglich nichts mit der erfindungsgemäßen Verwendung von Cerdioxid als anorganischer Radikalfänger zu tun.

Wie zuvor beschrieben, wird das Cerdioxid in Form diskreter Cerdioxidpartikel eingesetzt, Im allgemeinen weisen die eingesetzten Cerdioxidpartikel Teilchengrößen im Bereich von 0,005 bis 150 µm, insbesondere 0,01 bis 100 µm, auf. Die vorgenannten Werte für die Teilchengrößen sind dahingehend zu verstehen, daß mindestens 90 %, insbesondere mindestens 95 %, vorzugsweise mindestens 99 %, der eingesetzten Cerdioxidpartikel Teilchengrößen im vorgenannten Bereich aufweisen. Dennoch kann es anwendungsbezogen oder einzelfallbedingt gegebenenfalls erforderlich sein, von den vorgenannten Werten abzuweichen, ohne daß der Fachmann den Rahmen der vorliegenden Erfindung verläßt.

Die eingesetzten Cerdioxidpartikel weisen im allgemeinen mittlere Teilchengrößen d₅₀ im Bereich von 0,01 bis 80 µm, insbesondere 0,02 bis 40 µm, auf.
Die vorgenannten Teilchengrößen können durch an sich bekannte Methoden bestimmt werden, beispielsweise durch Laserbeugung oder dergleichen.

Erfindungsgemäß wird das Cerdioxid in Kombination mit mindestens einem UV-Absorber und/oder mit mindestens einem weiteren, zusätzlichen Radikalfänger eingesetzt. In besonders bevorzugter Ausführungsform wird das Cerdioxid in Kombination mit einem organischen oder anorganischen UV-Absorber, insbesondere mit einem anorganischen UV-Absorber, eingesetzt. In Kombination mit dem oder den UV-Absorbern und/oder dem oder den weiteren, zusätzlichen Radikalfängern entsteht eine völlig neuartige Kombination eines UV-Stabilisatorsystems, welches im Fall von anorganischen UV-Absorbern vollständig auf anorganischen Materialien beruht. Aber auch die Kombination von Cerdioxid mit organischen UV-Absorbern oder organischen Radikalfängern verlängert den Wirkzeitraum der UV-Absorber bzw. der organischen Radikalfänger signifikant infolge der Eigenschaft des Cerdioxids, als anorganischer Radikalfänger zu wirken und Radikale ohne eigene Zersetzung umwandeln zu können.

Der Begriff des UV-Absorbers ist im Rahmen der vorliegenden Erfindung sehr weit zu verstehen und wird erfindungsgemäß insbesondere als Sammelbezeichnung für Verbindungen mit ausgeprägtem Absorptionsvermögen für UV-Strahlung verwendet, die als Lichtschutzmittel bzw. UV-Stabilisatoren, insbesondere zur Verbesserung der Lichtbeständigkeit von Polymeren, vorzugsweise in technischen Produkten, verwendet werden können. Für weitergehende Einzelheiten kann verwiesen werden auf Römpp Chemielexikon, 10. Auflage, Georg Thieme Verlage Stuttgart/New York, Band 6, 1999, Seiten 4787/4788, Stichwort: "UV-Absorber", sowie Band 3, 1997, Seite 2403, Stichwort: "Lichtschutzmittel", deren gesamter Offenbarungsgehalt, einschließlich der dort jeweils referierten Literaturstellen, hiermit durch Bezugnahme eingeschlossen ist.

Wie zuvor beschrieben, wird das Cerdioxid erfindungsgemäß in Kombination mit einem UV-Absorber und/oder einem weiteren Radikalfänger eingesetzt; das gewichtsbezogene Verhältnis von Cerdioxid einerseits zu UV-Absorber und/oder Radikalfänger andererseits variiert, bezogen auf die Kombination von Cerdioxid und UV-Absorber und/oder Radikalfänger, im Bereich von 0,05 : 99,5 bis 50 : 50, insbesondere 1 : 99 bis 20 : 80. Dennoch kann es anwendungsbezogen oder einzelfallbedingt vorteilhaft oder erforderlich sein, von den vorgenannten Mengenverhältnissen abzuweichen.

Als UV-Absorber zur Kombination mit dem insbesondere partikulären Cerdioxid eignen sich beispielsweise anorganische UV-Absorber, vorzugsweise aus der Gruppe von Zinkoxiden, Titandioxiden (z. B. Rutil oder Anatas), Eisenoxiden, Rußen, Kohlenstoff sowie deren Mischungen. In diesem Fall entsteht ein kombiniertes UV-Stabilisatorsystem ausschließlich auf Basis anorganischer Materialien.

Gleichermaßen eignen sich zur Kombination mit dem Cerdioxid auch organische UV-Absorber. Beispiele für erfindungsgemäß geeignete organische UV-Absorber zur Kombination mit dem Cerdioxid sind organische UV-Absorber aus der Substanzklasse der Hydroxyphenylbenzotriazole, der Hydroxybenzophenone, der Hydroxyphenyltriazine, der Oxyaniline, der Hydroxyphenylpyrimidine, der Salicylsäurederivate, der Cyanoacrylate sowie deren Mischungen.

Gleichermaßen ist es möglich, im Rahmen der vorliegenden Erfindung das Cerdioxid mit einem weiteren, zusätzlichen Radikalfänger, insbesondere einem organischen Radikalfänger, zu kombinieren. Beispiele hierfür sind organische Radikalfänger aus der Gruppe von sterisch gehinderten Aminen, Phenolen sowie deren Mischungen.

Die erfindungsgemäße Verwendung des Cerdioxids läßt sich auf nahezu beliebige Polymere anwenden. Beispiele für Polymere, welche im Rahmen der erfindungsgemäßen Verwendung stabilisiert werden können, sind z. B. Polyacrylate, Polyester, Polyether, Polyamide, Polyolefine, Polybutadiene und deren Mischungen sowie Co- und Terpolymere der vorgenannten Polymere. Insbesondere können die zu stabilisierenden Polymere Bestandteil eines komplexen Systems, insbesondere eines Lacks, einer Farbe, einer Beschichtungsmasse oder dergleichen, sein.

Die Mengen, in denen das Cerdioxid im Rahmen der erfindungsgemäßen Verwendung eingesetzt wird, können in weiten Grenzen variieren. Im allgemeinen wird das Cerdioxid in Mengen von 0,1 bis 20 Gew.-%, insbesondere 0,2 bis 5 Gew.-%, bezogen auf die zu stabilisierenden Polymere, eingesetzt. Dennoch kann es einzelfallbedingt oder anwendungsbezogen erforderlich oder vorteilhaft sein, von den vorgenannten Mengen abzuweichen.

Wie zuvor beschrieben, wird das Cerdioxid in Kombination mit einem UV-Absorber und/oder einem weiteren Radikalfänger eingesetzt; dessen bzw. deren Mengen variieren gleichermaßen in weiten Grenzen. Insbesondere können der in Kombination mit dem Cerdioxid eingesetzte UV-Absorber und/oder der weitere Radikalfänger in Mengen von 0,1 bis 30 Gew.-%, insbesondere 0,3 bis 10 Gew.-%, bezogen auf die zu stabilisierende Polymere, eingesetzt werden. Dennoch kann es anwendungsbezogen oder einzelfallbedingt erforderlich oder vorteilhaft sein, von den vorgenannten Mengen abzuweichen.

Im Rahmen der erfindungsgemäßen Kombinationsanwendung von Cerdioxid einerseits und UV-Absorber und/oder zusätzlichem Radikalfänger andererseits kann die Menge der Kombination aus Cerdioxid einerseits und UV-Absorber und/oder Radikalfänger andererseits gleichermaßen in weiten Bereichen variieren. Erfindungsgemäß wird die vorgenannte Kombination in Mengen von 0,2 bis 50 Gew.-%, insbesondere 0,5 bis 15 Gew.-%, bezogen auf die zu stabilisierenden Polymere, eingesetzt werden, wobei es jedoch anwendungsbezogen oder einzelfallbedingt erforderlich oder vorteilhaft sein kann, von den vorgenannten Mengen abzuweichen.

Wie zuvor beschrieben, kann das Cerdioxid als anorganischer Radikalfänger insbesondere in polymerbasierten Lacken, Farben, Beschichtungsmassen oder dergleichen eingesetzt werden.

Wie die Anmelderin überraschenderweise herausgefunden hat, besitzt insbesondere partikuläres Cerdioxid die Fähigkeit als Fänger freier Radikale zu wirken und damit die zuvor beschriebenen Radikalprozesse, die zum Abbau von Polymeren führen können, zu unterbinden, ohne jedoch selbst chemisch oder physikalisch abgebaut zu werden. In Kombination mit organischen und/oder anorganischen UV-Absorbern und/oder zusätzlichen Radikalfängern kann deren Wirkung durch die kombinatorische Verwendung von Cerdioxid signifikant gesteigert bzw. verbessert werden, da sowohl der photochemische Abbau der UV-Absorber und/oder Radikalfänger als solche als auch der photochemische Abbau der zu stabilisierenden Polymere deutlich reduziert wird. Dies gelingt durch den Einsatz von insbesondere partikulärem Cerdioxid als anorganischer Radikalfänger. In Kombination mit anorganischen UV-Absorbern entsteht ein vollständig anorganisch basiertes UV-Absorbern entsteht ein vollständig anorganisch basiertes UV-Stabilisatorsystem für Polymere. Aber auch die Kombination von Cerdioxid mit organischen UV-Absorbern verlängert deren Wirkzeitraum signifikant infolge der Radikalfängereigenschaften des Cerdioxids.

Schließlich ist Gegenstand der vorliegenden Erfindung - gemäß einem zweiten Aspekt der vorliegenden Erfindung - ein Verfahren zur Stabilisierung von organischen Polymeren, insbesondere in Form von polymerbasierten Formulierungen, wie insbesondere Lacken, Farben, Beschichtungsmassen oder dergleichen, gegen deren insbesondere photochemisch, thermisch, physikalisch und/oder chemisch induzierten Abbau durch freie Radikale, insbesondere gegen UV-Lichteinwirkung, wobei den Polymeren Cerdioxid in Form diskreter Cerdioxidpartikel mit Teilchengrößen im Bereich von 0,005 bis 150 µm als anorganischer Radikalfänger in Kombination mit mindestens einem UV-Absorber und/oder mit mindestens einem weiteren Radikalfänger in einem gewichtsbezogenen Verhältnis von Cerdioxid einerseits zu UV-Absorber und/oder weiterem Radikalfänger andererseits, bezogen auf die Kombination von Cerdioxid und UV-Absorber und/oder weiterem Radikalfänger, im Bereich von 0,05 : 99,5 bis 50 : 50 zugesetzt wird, wobei die Kombination aus Cerdioxid einerseits und UV-Absorber und/oder weiterem Radikalfänger, andererseits in Mengen von 0,2 bis 50 Gew.-%, bezogen auf die zu stabilisierenden Polymere, eingesetzt wird.

Für weitergehende Einzelheiten zu dem erfindungsgemäßen Verfahren kann zur Vermeidung unnötiger Wiederholungen Bezug genommen werden auf die vorstehenden Ausführungen zu der erfindungsgemäßen Verwendung, welche in bezug auf das erfindungsgemäße Verfahren entsprechend gelten.

Die Cerdioxidpartikel sind bzw. werden erfindungsgemäß zur Stabilisierung von organischen Polymeren bzw. in der Polymerenzusammensetzung vorzugsweise homogen verteilt bzw. dispergiert. Vorzugsweise beträgt der mittlere Abstand höchstens 500 µm, insbesondere höchstens 300 µm, ganz bevorzugt 100 µm oder weniger.

Die Cerdioxidpartikel sind vorzugsweise separat - also getrennt - von dem weiter vorgesehenen mindestens einem UV-Absorber ausgebildet.

Die Cerdioxidpartikel bestehen vorzugsweise ausschließlich aus Cerdioxid. Jedoch können diese auch andere Stoffe, Beimischungen o. dgl. enthalten, also als Mischpartikel ausgebildet sein.

Weitere Ausgestaltungen, Abwandlungen und Variationen der vorliegenden Erfindung sind für den Fachmann beim Lesen der Beschreibung ohne weiteres erkennbar und realisierbar, ohne daß er dabei den Rahmen der vorliegenden Erfindung verläßt.

Die vorliegende Erfindung wird anhand der nachfolgenden Ausführungsbeispiele veranschaulicht, welche die vorliegende Erfindung jedoch keinesfalls beschränken sollen.

### AUSFÜHRUNGSBEISPIELE:

### Beispiel 1: Anwendungsbeispiele für die erfindungsgemäße Verwendung von Cerdioxid in Form von Partikeln

Die folgenden Anwendungsbeispiele für die erfindungsgemäße Verwendung von Cerdioxid in partikulärer Form wurden durchgeführt:
Drei Lasuren A B und C wurden mit jeweils unterschiedlicher Schichtdicke (Lasur A: 30 µm; Lasur B: 100 µm; Lasur C: 100 µm) auf Holzsubstrate aufgetragen, Bei der Lasur A handelte es sich um eine polymere Dispersion auf Basis von Acrylat, Methacrylat und Polystyrol, während es sich bei den Lasuren B und C jeweils um Acrylatdispersionen handelte.

Die Lasuren wurden sowohl als solche aufgetragen ("Blindprobe") als auch nach Inkorporierung unterschiedlicher Mengen an Cerdioxid, und zwar in alleiniger Verwendung und in Kombination mit einem anorganischen UV-Absorber (Zinkoxid oder Titandioxid), oder nach Inkorporierung von Zinkoxid allein ("Vergleich").

Nach einer Bestrahlungsdauer mit künstlichem UV-Licht von 500 Stunden bzw. 2.000 Stunden wurden dann die Differenzen in den Glanzwerten (ΔG) und in den Farbwerten (ΔE) in bezug auf die Lackoberfläche bestimmt.

Die Ergebnisse sind in den nachfolgenden Tabellen 1 bis 4 wiedergegeben, wobei sich die Angabe der Teilchengrößen auf die mittleren Teilchengrößen beziehen:

**Tabelle 1: 500 Stunden Bestrahlungsdauer**

| Lasur | 20 nm Cerdioxid | 20 nm ZnO | 60 nm ZnO | ΔG | ΔE |
|---|---|---|---|---|---|
| A* | | | | 12 | -32 |
| A* | 0,5 % | | | 10 | -20 |
| A* | | 4,0 % | | 6 | -18 |
| A* | | | 4,0 % | 9 | -22 |
| A** | 0,5 % | 2.0 % | | 4 | -13 |
| A** | 0,5 % | | 2,0 % | 7 | -12 |

| | | | | | |
|---|---|---|---|---|---|
| * Vergleich ** Erfindung | | | | | |

**Tabelle 2: 500 Stunden Bestrahlungsdauer**

| Lasur | 20 nm Cerdioxid | ΔG | ΔE |
|---|---|---|---|
| B* | | 14 | -31 |
| B* | 0,5 % | 6 | -20 |

| | | | |
|---|---|---|---|
| * Vergleich | | | |

**Tabelle 3: 2.000 Stunden Bestrahlungsdauer**

| Lasur | 20 nm Cerdioxid | 20 nm ZnO | ΔG | ΔE |
|---|---|---|---|---|
| C* | | | 10 | -32 |
| C* | 0,2 % | | 10 | -28 |
| C** | 0,2 % | 2,0 % | 6 | -14 |

| | | | | |
|---|---|---|---|---|
| * Vergleich ** erfindung | | | | |

**Tabelle 4: 2.000 Stunden Bestrahlungsdauer**

| Lasur | 20 nm Cerdioxid | 10 nm Titandioxid | ΔG | ΔE |
|---|---|---|---|---|
| C* | | | 10 | -32 |
| C* | 0,2 % | | 10 | -28 |
| C** | 0,2 % | 1,0 % | 7 | -16 |

| | | | | |
|---|---|---|---|---|
| * Vergleich ** Erfindung | | | | |

Wie die vorstehenden Ergebnisse zeigen, bewirkt die Inkorporierung von Cerdioxid bereits in relativ geringen Mengen eine signifikante Verbesserung der UV-Stabilität polymerer Lasuren gegenüber einer Blindprobe ohne Inkorporierung von UV-schützenden Substanzen (vgl. Tabellen 1 bis 4).

Die vorstehenden Ergebnisse zeigen gleichermaßen, daß durch die gemeinsame Inkorporierung von Cerdioxid als Radikalfänger in Kombination mit einem anorganischen UV-Absorber (hier: Zinkoxid oder Titandioxid) die UV-Schutzwirkung noch deutlich gesteigert werden kann (vgl. Tabellen 1, 3 und 4).

Wie Tabelle 1 zeigt, kann mit Cerdioxid allein annähernd derselbe bzw. sogar ein besserer UV-Schutz im Vergleich mit einem herkömmlichen UV-Absorber auf Basis von Zinkoxid erreicht werden, und dies bei nur einem Bruchteil der eingesetzten Menge an Cerdioxid im Vergleich zu dem herkömmlichen UV-Absorber (hier konkret: nur ein Achtel der Menge an Cerdioxid im Vergleich zu Zinkoxid). Die Kombination des Cerdioxids mit dem Zinkoxid bei gleichzeitig hälftiger Reduzierung der eingesetzten Zinkoxidmenge wiederum führt zu einer signifikanten Steigerung der UV-Schutzwirkung (vgl. Tabelle 1), welche über die rein additive Wirkung der Einzelbestandteile hinausgeht - was auf einen synergistischen Effekt hinweist.

### Beispiel 2: Nachweis der Radikalfängereigenschaften von Cerdioxidpartikeln

Zum Nachweis der Eigenschaften von partikulärem Cerdioxid als Radikalfänger wurden die folgenden Versuche durchgeführt:
a) Ein Druckfarbe mit lichtempfindlichen organischen Tintenstrahlpigmenten wurden zum einen nur mit ZnO und zum anderen mit einer Kombination aus ZnO und CeO₂ versetzt und dann 250 Stunden lang mit UV-A-Strahlung bestrahlt. Zum Vergleich wurde eine Nullprobe ohne Inkorporation von ZnO und CeO₂ in der gleichen Weise bestrahlt.
Die folgenden a-Werte und b-Werte wurden erhalten, wobei die Werte mit einem BYK-Gardner-Farbmeßgerät bestimmt und im CieLAB-System (Meßmethode: ISO 7724) angegeben sind:
Für rot (a-Werte):

| | |
|---|---|
| Ausgangswert: | 36 |
| Nullprobe ohne Schutz: | 20 (Δa = 16) |
| Probe mit 2 % ZnO: | 32 (Δa = 4) |
| Probe mit 1 % CeO₂: | 31 (Δa = 5) |
| Probe mit 2 % ZnO und 1 % CeO₂: | 37 (Δa = -1) |

Für blau (b-Werte):

| | |
|---|---|
| Ausgangswert: | -33 |
| Nullprobe ohne Schutz: | -13 (Δb = 20) |
| Probe mit 2 % ZnO: | -28 (Δb = 5) |
| Probe mit 1 % CeO₂: | -28 (Δb = 5) |
| Probe mit 2 % ZnO und 1 % CeO₂: | -31 (Δb = 2) |

b) Darüber hinaus wurde analog zu dem in J. Oil Col. Chem. Assoc. 1978, 61, Seiten 351-355 (R. B. Cundall et al. "The photocatalytic oxidation of liquid phase propan-2-ol by pure rutile and titanium dioxide pigments") beschriebenen Verfahren die Oxidation von Isopropanol zu Aceton in Gegenwart von photoaktivem Titandioxid und dem stabilisierenden Cerdioxid untersucht:
Eine Dispersion von 5 % nichtstabilisiertem nanoskaligem Anatas in Isopropanol erzeugt innerhalb von 60 Minuten bei Bestrahlung 1,6 x 10⁻² mol Aceton/kg.
Durch Zugabe von 0,5 % Cerdioxid geht dieser Wert auf 0,6 x 10⁻² mol Aceton/kg und bei Zusatz von 2 % Cerdioxid auf 0,1 x 10⁻² mol Aceton/kg zurück.

## Patentansprüche

1. Verwendung von Cerdioxid als anorganischer Radikalfänger zur Stabilisierung von organischen Polymeren gegen deren insbesondere photochemisch, thermisch, physikalisch und/oder chemisch induzierten Abbau durch freie Radikale, insbesondere gegen UV-Lichteinwirkung, wobei das Cerdioxid in Form diskreter Cerdioxidpartikel mit Teilchengrößen im Bereich von 0,005 bis 150 µm und in Kombination mit mindestens einem UV-Absorber und/oder mit mindestens einem weiteren Radikalfänger eingesetzt wird, wobei die Kombination aus Cerdioxid einerseits und UV-Absorber und/oder weiterem Radikalfänger andererseits in Mengen von 0,2 bis 50 Gew.-%, bezogen auf die zu stabilisierenden Polymere, eingesetzt wird und wobei das gewichtsbezogene Verhältnis von Cerdioxid einerseits zu UV-Absorber und/oderweiterem Radikalfänger andererseits, bezogen auf die Kombination von Cerdioxid und UV-Absorber und/oder weiterem Radikalfänger, im Bereich von 0,05 : 99,5 bis 50 : 50 variiert.

2. Verwendung nach Anspruch 1, **dadurch gekennzeichnet, daß** die Cerdioxidpartikel mittlere Teilchengrößen d₅₀ im Bereich von 0,01 bis 80 µm, insbesondere 0,02 bis 40 µm, aufweisen.

3. Verwendung nach Anspruch 1 oder 2, **dadurch gekennzeichnet, daß** die Cerdioxidpartikel mit Teilchengrößen im Bereich von 0,01 bis 100 µm,

4. Verwendung nach einem der vorangehenden Ansprüche, **dadurch gekennzeichnet, daß** das Cerdioxid in Kombination mit einem insbesondere anorganischen UV-Absorber eingesetzt wird.

5. Verwendung nach einem der vorangehenden Ansprüche, **dadurch gekennzeichnet, daß** das gewichtsbezogene Verhältnis von Cerdioxid einerseits zu UV-Absorber und/oder Radikalfänger andererseits, bezogen auf die Kombination von Cerdioxid und UV-Absorber und/oder Radikalfänger, im Bereich von 1 : 99 bis 20 : 80 variiert.

6. Verwendung nach einem der vorangehenden Ansprüche, **dadurch gekennzeichnet, daß** als UV-Absorber ein anorganischer UV-Absorber, insbesondere aus der Gruppe von Zinkoxiden, Titandioxiden, Eisenoxiden, Rußen, Kohlenstoff oder deren Mischungen, und/oder ein organischer UV-Absorber, insbesondere aus der Gruppe von Hydroxyphenylbenzotriazolen, Hydroxybenzophenonen, Hydroxyphenyltriazinen, Oxyanilinen, Hydroxyphenylpyrimidinen, Salicylsäurederivaten, Cyanoacrylaten oder deren Mischungen, eingesetzt wird.

7. Verwendung nach einem der vorangehenden Ansprüche, **dadurch gekennzeichnet, daß** als weiterer Radikalfänger ein organischer Radikalfänger, insbesondere aus der Gruppe von sterisch gehinderten Aminen, Phenolen oder deren Mischungen, eingesetzt wird.

8. Verwendung nach einem der vorangehenden Ansprüche, **dadurch gekennzeichnet, daß** der UV-Absorber und/oder der weitere Radikalfänger in Mengen von 0,1 bis 30 Gew.-%, insbesondere 0,3 bis 10 Gew,-%, bezogen auf die zu stabilisierenden Polymere, eingesetzt wird bzw. werden

9. Verwendung nach einem der vorangehenden Ansprüche, **dadurch gekennzeichnet, daß** die Kombination aus Cerdioxid einerseits und UV-Absorber und/oder Radikalfänger andererseits in Mengen von 0,5 bis 15 Gew.-%, bezogen auf die zu stabilisierenden Polymere, eingesetzt wird.

10. Verwendung nach einem der vorangehenden Ansprüche, **dadurch gekennzeichnet, daß** das Cerdioxid in Mengen von 0,1 bis 20 Gew.-%, insbesondere 0,2 bis 5 Gew.-%, bezogen auf die zu stabilisierenden Polymere, eingesetzt wird.

11. Verwendung nach einem der vorangehenden Ansprüche, **dadurch gekennzeichnet, daß** die zu stabilisierenden Polymere ausgewählt sind aus der Gruppe von Polyacrylaten, Polyestern, Polyethern, Polyamiden, Polyolefinen, Polybutadienen und deren Mischungen sowie Co- und Terpolymeren der vorgenannten Polymere.

12. Verwendung nach einem der vorangehenden Ansprüche, **dadurch gekennzeichnet, daß** die zu stabilisierenden Polymere Bestandteil eines Lacks, einer Farbe, einer Beschichtungsmasse oder dergleichen sind.

13. Verwendung nach einem der vorangehenden Ansprüche für polymerbasierte Lacke, Farben, Beschichtungsmassen oder dergleichen.

14. Verfahren zur Stabilisierung von organischen Polymeren, insbesondere in Form von polymerbasierten Formulierungen, wie Lacken, Farben, Beschichtungsmassen oder dergleichen, gegen deren insbesondere photochemisch, thermisch, physikalisch und/oder chemisch induzierten Abbau durch freie Radikale, insbesondere gegen UV-Lichteinwirkung, wobei den Polymeren Cerdioxid in Form diskreter Cerdioxidpartikelmit Teilchengrößen im Bereich von 0,005 bis 150 µm als anorganischer Radikalfänger in Kombination mit mindestens einem UV-Absorber und/oder mit mindestens einem weiteren Radikalfänger, in einem gewichtsbezogenen Verhältnis von Cerdioxid einerseits zu UV-Absorber und/oder weiterem Radikalfänger andererseits, bezogen auf die Kombination von Cerdioxid und UV-Absorber und/oder weiterem Radikalfänger, im Bereich von 0,05 : 99,5 bis 50 : 50 zugesetzt wird, wobei die Kombination aus Cerdioxid einerseits und UV-Absorber und/oder weiterem Radikalfänger andererseits in Mengen von 0,2 bis 50 Gew.-%, bezogen auf die zu stabilisierenden Polymere, eingesetzt wird.

## Claims

1. Use of cerium dioxide as an inorganic free-radical scavenger for stabilizing organic polymers against their degradation induced, in particular, photochemically, thermally, physically and/or chemically, by free radicals, more particularly against exposure to UV light, the cerium dioxide being used in the form of discrete cerium dioxide particles having particle sizes in the range from 0.005 to 150 µm and being used in combination with at least one UV absorber and/or of at least one further free-radical scavenger, the combination of cerium dioxide on the one hand and UV absorber and/or further free-radical scavenger on the other hand being used in amounts of 0.2 % to 50 % by weight, based on the polymers to be stabilized, and the weight ratio of cerium dioxide on the one hand to UV absorber and/or further free-radical scavenger on the other hand, based on the combination of cerium dioxide and UV absorber and/or further free-radical scavenger, varying in the range from 0.05 : 99.5 to 50 : 50.

2. Use according to Claim 1, **characterized in that** the cerium dioxide particles have average particle sizes d₅₀ in the range from 0.01 to 80 µm, more particularly 0.02 to 40 µm.

3. Use according to Claim 1 or 2, **characterized in that** the cerium dioxide particles have particle sizes in the range from 0.01 to 100 µm.

4. Use according to any of the preceding claims, **characterized in that** the cerium dioxide is used in combination with a UV absorber, more particularly an inorganic UV absorber.

5. Use according to any of the preceding claims, **characterized in that** the weight ratio of cerium dioxide on the one hand to UV absorber and/or free-radical scavenger on the other hand, based on the combination of cerium dioxide and UV absorber and/or free-radical scavenger, varies in the range from 1 : 99 to 20 : 80.

6. Use according to any of the preceding claims, **characterized in that** use is made as UV absorber of an inorganic UV absorber, more particularly from the group of zinc oxides, titanium dioxides, iron oxides, carbon blacks, carbon or mixtures thereof, and/or of an organic UV absorber, more particularly from the group of hydroxyphenylbenzotriazoles, hydroxybenzophenones, hydroxyphenyltriazines, oxyanilines, hydroxyphenylpyrimidines, salicylic acid derivatives, cyanoacrylates or mixtures thereof.

7. Use according to any of the preceding claims, **characterized in that** use is made as further free-radical scavenger of an organic free-radical scavenger, more particularly from the group of sterically hindered amines, phenols or mixtures thereof.

8. Use according to any of the preceding claims, **characterized in that** the UV absorber and/or the further free-radical scavenger is or are used in amounts of 0.1 % to 30 % by weight, more particularly 0.3 % to 10% by weight, based on the polymers to be stabilized.

9. Use according to any of the preceding claims, **characterized in that** the combination of cerium dioxide on the one hand and UV absorber and/or free-radical scavenger on the other hand is used in amounts of 0.5 % to 15% by weight, based on the polymers to be stabilized.

10. Use according to any of the preceding claims, **characterized in that** the cerium dioxide is used in amounts of 0.1 % to 20 % by weight, more particularly 0.2 % to 5 % by weight, based on the polymers to be stabilized.

11. Use according to any of the preceding claims, **characterized in that** the polymers to be stabilized are selected from the group of polyacrylates, polyesters, polyethers, polyamides, polyolefins, polybutadienes and mixtures thereof and also copolymers and terpolymers of the aforementioned polymers.

12. Use according to any of the preceding claims, **characterized in that** the polymers to be stabilized are part of a paint, an ink, a coating material or the like.

13. Use according to any of the preceding claims for polymer-based paints, inks, coating materials or the like.

14. Method of stabilizing organic polymers, more particularly in the form of polymer-based formulations, such as paints, inks, coating materials or the like, against their degradation induced, in particular, photochemically, thermally, physically and/or chemically, by free radicals, more particularly against UV light exposure, the polymers being admixed with cerium dioxide in the form of discrete cerium dioxide particles having particle sizes in the range from 0.005 to 150 µm as inorganic free-radical scavenger in combination with at least one UV absorber and/or of at least one further free-radical scavenger, in a weight ratio of cerium dioxide on the one hand to UV absorber and/or further free-radical scavenger on the other hand, based on the combination of cerium dioxide and UV absorber and/or further free-radical scavenger, in the range from 0.05 : 99.5 to 50 : 50, the combination of cerium dioxide on the one hand and UV absorber and/or further free-radical scavenger on the other hand being used in amounts of 0.2 % to 50 % by weight, based on the polymers to be stabilized.

## Revendications

1. Utilisation de dioxyde de cérium en tant que capteur inorganique de radicaux pour la stabilisation de polymères organiques vis-à-vis de leur dégradation par des radicaux libres, induite photochimiquement, thermiquement, physiquement et/ou chimiquement, en particulier vis-à-vis de l'effet de la lumière UV, le dioxyde de cérium étant utilisé sous forme de particules de dioxyde de cérium distinctes à tailles de particule dans la plage de 0,005 à 150 µm et en association avec au moins un absorbeur UV et/ou avec au moins un autre capteur de radicaux, l'association de dioxyde de cérium d'une part et d'absorbeur UV et/ou d'autre capteur de radicaux d'autre part étant utilisée en quantités de 0,2 à 50 % en poids, par rapport aux polymères à stabiliser et le rapport pondéral du dioxyde de cérium d'une part à l'absorbeur UV et/ou à l'autre capteur de radicaux d'autre part, par rapport à l'association de dioxyde de cérium et absorbeur UV et/ou autre capteur de radicaux, variant dans la plage de 0,05 : 99,5 à 50 : 50.

2. Utilisation selon la revendication 1, **caractérisée en ce que** les particules de dioxyde de cérium ont des tailles moyennes de particule d₅₀ dans la plage de 0,01 à 80 µm, en particulier de 0,02 à 40 µm.

3. Utilisation selon la revendication 1 ou 2, **caractérisée en ce que** les particules de dioxyde de cérium ont des tailles de particule dans la plage de 0,01 à 100 µm.

4. Utilisation selon l'une quelconque des revendications précédentes, **caractérisée en ce que** le dioxyde de cérium est utilisé en association avec un absorbeur UV en particulier inorganique.

5. Utilisation selon l'une quelconque des revendications précédentes, **caractérisée en ce que** le rapport pondéral du dioxyde de cérium d'une part à l'absorbeur UV et/ou au capteur de radicaux d'autre part, par rapport à l'association de dioxyde de cérium et absorbeur UV et/ou capteur de radicaux, varie dans la plage de 1 : 99 à 20 : 80.

6. Utilisation selon l'une quelconque des revendications précédentes, **caractérisée en ce qu'**on utilise comme absorbeur UV un absorbeur UV inorganique, en particulier choisi dans le groupe des oxydes de zinc, dioxydes de titane, oxydes de fer, noirs de carbone, carbone ou des mélanges de ceux-ci, et/ou un absorbeur UV organique, en particulier choisi dans le groupe des hydroxyphénylbenzotriacoles, hydroxybenzophénones, hydroxyphényltriazines, oxyanilines, hydroxyphénylpyrimidines, dérivés d'acide salicylique, cyanoacrylates ou des mélanges de ceux-ci.

7. Utilisation selon l'une quelconque des revendications précédentes, **caractérisée en ce qu'**on utilise comme autre capteur de radicaux un capteur organique de radicaux, en particulier choisi dans le groupe des phénols, amines à empêchement stérique ou des mélanges de ceux-ci.

8. Utilisation selon l'une quelconque des revendications précédentes, **caractérisée en ce qu'**on utilise l'absorbeur UV et/ou l'autre capteur de radicaux en quantités de 0,1 à 30 % en poids, en particulier de 0,3 à 10 % en poids, par rapport aux polymères à stabiliser.

9. Utilisation selon l'une quelconque des revendications précédentes, **caractérisée en ce qu'**on utilise l'association de dioxyde de cérium d'une part et d'absorbeur UV et/ou de capteur de radicaux d'autre part en quantités de 0,5 à 15 % en poids, par rapport aux polymères à stabiliser.

10. Utilisation selon l'une quelconque des revendications précédentes, **caractérisée en ce qu'**on utilise le dioxyde de cérium en quantités de 0,1 à 20 % en poids, en particulier de 0,2 à 5% en poids, par rapport aux polymères à stabiliser.

11. Utilisation selon l'une quelconque des revendications précédentes, **caractérisée en ce que** les polymères à stabiliser sont choisis dans le groupe des polyacrylates, polyesters, polyéthers, polyamides, polyoléfines, polybutadiènes et des mélanges de ceux-ci ainsi que des copolymères et terpolymères des polymères précités.

12. Utilisation selon l'une quelconque des revendications précédentes, **caractérisée en ce que** les polymères à stabiliser sont un composant d'une peinture, d'une encre, d'une matière de revêtement ou similaires.

13. Utilisation selon l'une quelconque des revendications précédentes, pour des peintures, encres, matières de revêtement ou similaires, polymérisables.

14. Procédé pour la stabilisation de polymères organiques, en particulier sous forme de compositions polymérisables, telles que des peintures, des encres, des matières de revêtement ou similaires, vis-à-vis de leur dégradation par des radicaux libres, induite en particulier photochimiquement, thermiquement, physiquement et/ou chimiquement, en particulier vis-à-vis de l'effet de la lumière UV, dans lequel on ajoute aux polymères du dioxyde de cérium sous forme de particules de dioxyde de cérium distinctes à tailles de particule dans la plage de 0,005 à 150 µm en tant que capteurs inorganiques de radicaux en association avec au moins un absorbeur UV et/ou avec au moins un autre capteur de radicaux en un rapport pondéral du dioxyde de cérium d'une part à l'absorbeur UV et/ou l'autre capteur de radicaux d'autre part, par rapport à l'association de dioxyde de cérium et absorbeur UV et/ou autre capteur de radicaux, dans la plage de 0,05 : 99,5 à 50 : 50, l'association de dioxyde de cérium d'une part et absorbeur UV et/ou autre capteur de radicaux d'autre part étant utilisée en quantités de 0,2 à 50 % en poids, par rapport aux polymères à stabiliser.
